# EUROPÄISCHE PATENTSCHRIFT

(11) **EP 0 690 106 B1**
(45) Veröffentlichungstag und Bekanntmachung des Hinweises auf die Patenterteilung: **01.12.1999**
(21) Anmeldenummer: 95109602.3
(22) Anmeldetag: 21.06.1995
(51) Int. Cl.: C09D 5/44

(54) **Härtung von kataphoretischen Tauchlacken mit Wismutkatalysatoren**
Curing of cataphoretic coatings with Bismuth catalysts
Durcissement de peintures cataphorétiques à l'aide de catalyseurs à base de bismuth

(30) Priorität: 01.07.1994 DE 4423139
(43) Veröffentlichungstag der Anmeldung: 03.01.1996
(73) Patentinhaber: HOECHST AKTIENGESELLSCHAFT, 65926 Frankfurt am Main (DE)
(72) Erfinder: Foedde, Hartmut, D-65232 Taunusstein (DE); Schafheutle, Markus A., Dr., D-65239 Hochheim (DE); Völker, Achim, Dr., D-65197 Wiesbaden (DE); Wehner, Susanne, D-65606 Villmar (DE); Klein, Klausjörg, D-42289 Wuppertal (DE)
(74) Vertreter: Zounek, Nikolai, Dipl.-Ing.

(56) Entgegenhaltungen:
- EP-A- 0 509 437
- WO-A-93/24578

## Beschreibung

Dispersionen von Polymeren können als Bindemittel in wäßrigen Lacksystemen eingesetzt werden. Die Härtung des Lackfilms erfolgt durch einen Vernetzungsschritt. Beruht die Vernetzung auf einer Umesterung, einer Umamidierung oder Umurethanisierung, so können dabei Verbindungen von Metallen der Gruppen IVb bis Vla des Periodensystems als Katalysatoren wirken.

Bei der Härtung von kationischen Lackbindemitteln, die beispielsweise in der kataphoretischen Tauchlackierung ("KTL") von Fahrzeugkarossen eingesetzt werden, benutzt man vielfach organische Blei- und Zinnverbindungen einzeln und im Gemisch als Katalysatoren. Beispielsweise sind dabei organische Verbindungen des vierwertigen Zinn wie Dibutylzinnoxid oder Dibutylzinndilaurat eingesetzt worden.

Es hat in der Vergangenheit nicht an Versuchen gefehlt, diese Blei- und Zinnverbindungen wegen ihrer Toxizität durch Verbindungen anderer Metalle zu ersetzen.

Es ist bekannt, Wismutverbindungen bei solchen Umurethanisierungsreaktionen als Katalysator einzusetzen. Die katalytische Aktivität von Wismutverbindungen bei der Knüpfung von Urethanbindungen in der Reaktion von Isocyanaten und Hydroxyverbindungen ist beispielsweise bekannt aus "Polyurethanes, Chemistry and Technology", High Polymers Vol. XVI, Part I, Wiley Interscience 1967, Seite 167. Bei Wismutverbindungen sind die katalytische Aktivität und die Korrosionsschutzwirkung ähnlich gut wie die von Bleiverbindungen. Im Gegensatz zu den amphoteren Oxiden von Blei und Zinn ist das Oxid des dreiwertigen Wismut jedoch stark basisch. Wismutoxid löst sich in starken Säuren unter Bildung der entsprechenden Salze auf, beim Verdünnen oder Neutralisieren mit Wasser fällt jedoch Wismuthydroxid als flockiger Niederschlag aus. Die Lösungen der Salze von starken Säuren sind deutlich sauer, beim Zusatz zu Kataphorese-Tauchlackbädern verschieben sie den pH-Wert unter die untere zulässige Grenze. Der pH-Wert muß danach durch Zusatz von Basen erneut eingestellt werden. Versucht man, die Wismutsalzlösung weniger stark sauer einzustellen, so fällt umgehend oder nach kurzer Zeit Wismuthydroxid aus, damit sinkt oder verschwindet die katalytische Aktivität, der Niederschlag führt zu Oberflächenstörungen in der Lackschicht.

In der österreichischen Patentschrift AT 397 820 sind wasserverdünnbare kationische Lackbindemittel beschrieben, die Wismut-Salze von aliphatischen Hydroxycarbonsäuren wie Milchsäure und Dimethylolpropionsäure enthalten. Dabei wird dem Bindemittel soviel Säure zugesetzt, daß das Wismutsalz nicht hydrolysiert und dann ausfällt. Sodann muß das Wismutsalz über längere Zeit (2 Stunden) portionsweise zugegeben werden, ein Nachrühren während weiterer 6 Stunden ist erforderlich. Erst dann kann die Badflüssigkeit durch Verdünnen mit z.B. Methoxypropanol auf einen Feststoffmassengehalt von ca. 65 % hergestellt werden. Es ist nach diesem Verfahren nicht möglich, eine fertige Katalysatorzubereitung einer ansonsten fertigen KTL-Badflüssigkeit zuzugeben.

Es bestand daher die Aufgabe, Wismutkatalysatorzubereitungen zur Verfügung zu stellen, die sich nachträglich einer KTL-Badflüssigkeit zusetzen lassen. Dabei soll der pH-Wert des KTL-Bades nicht oder nur so wenig ändern, daß eine erneute Einstellung des pH-Wertes des KTL-Bades nach Katalysatorzugabe entfallen kann.

Gegenstand der Erfindung sind wasserlösliche Wismutverbindungen enthaltende Zusammensetzungen, die als Katalysatoren für die Härtung von kataphoretischen Tauchlacken geeignet sind, dadurch gekennzeichnet, daß sie ein Epoxid-Amin-Addukt enthalten in einer solchen Menge, daß das Verhältnis der Anzahl der Wismut-Atome zur Anzahl der β-Hydroxyamin-Gruppen des Epoxid-Amin-Addukts 10:1 bis 1:10, bevorzugt 5:1 bis 1:5, besonders bevorzugt 3:1 bis 1:3 beträgt, und daß zur Herstellung der Wismutverbindung Säure in einer solchen Menge eingesetzt wird, daß auf 1 mol Wismut zwischen 0,1 mol und weniger als 2 mol dissoziierbare Protonen kommen.

Die erfindungsgemäßen Wismutkatalysator-Zubereitungen werden hergestellt durch
- Auflösen einer oder mehrerer basischer Wismutverbindungen in einer wäßrigen Säure und
- anschließender Zugabe eines Umsetzungsprodukts aus mindestens einer Epoxidverbindung und mindestens einem organischen Amin,
- wobei die Säure in einer solchen Menge eingesetzt wird, daß pro 1 mol Wismut (Bi³⁺) zwischen 0,1 mol und weniger als 2 mol dissoziierbare Protonen vorhanden sind.

Bevorzugt werden Säuren in einer solchen Menge eingesetzt, daß zwischen 0,2 mol und bis zu 1,5 mol, besonders bevorzugt zwischen 0,3 mol und bis zu 1,2 mol dissoziierbare Protonen auf 1 mol Wismut (Bi³⁺) kommen.

Die basischen Wismutverbindungen, die erfindungsgemäß verwendbar sind, sind beispielsweise Oxide und Hydroxide des dreiwertigen Wismut, wie Wismut-Trioxid Bi₂O₃, das Orthohydroxid Bi(OH)₃ und das Wismutylhydroxid BiO(OH). Gleichfalls geeignet sind das basische Wismutnitrat (BiO)NO₃ und das basische Wismutcarbonat (BiO)₂CO₃. Es können auch Gemische dieser Verbindungen verwendet werden, wobei auch ein kleinerer Teil (bis zu 50 %) durch ein neutrales Wismutsalz ersetzt werden kann.

Geeignete Säuren sind die anorganischen starken Säuren wie Schwefelsäure, Salpetersäure und Phosphorsäure. Die Halogenwasserstoffsäuren ergeben zwar auch Wismutkatalysator-Zubereitungen gemäß der Erfindung, jedoch ist die Anwesenheit von Halogenid-Anionen in der KTL-Schicht auf einer Automobilkarosse wegen der Korrosionswirkung der Halogenidionen zu vermeiden. Bevorzugt sind organische Säuren wie Carbon-, Sulfon- und Phosphonsäuren. Besonders bevorzugt sind solche organischen Säuren, die eine oder mehrere Hydroxygruppen enthalten, die vorzugsweise in α-, β- oder γ-Stellung zur Säuregruppe stehen. Organische Hydroxycarbonsäuren können einzeln oder in Mischung eingesetzt werden.
Hierunter fallen die aliphatischen Hydroxycarbonsäuren wie Milchsäure, Weinsäure, Traubensäure, Äpfelsäure, Hydroxymalonsäure, Dihydroxybernsteinsäure, Trihydroxybernsteinsäure, Hydroxymethylmalonsäure und die Bishydroxyalkancarbonsäuren wie Bis(hydroxymethyl)propionsäure und Bis(hydroxymethyl)malonsäure. Geeignete aromatische Hydroxycarbonsäuren sind Salicylsäure, 2-Hydroxyterephthalsäure, 2-Hydroxynaphthoesäure-1 und 3-Hydroxynaphthoësäure-2. Bevorzugt wird eine Säurekomponente eingesetzt, die mindestens eine Hydroxyalkancarbonsäure enthält.

Die für die Erfindung geeigneten Epoxid-Amin-Addukte sind wasserverdünnbare Amino-Epoxidharze und solche Carbonataminaddukte, die in DE 36 44 370 bzw. EP 272 665 beschrieben sind. Solche Amino-Epoxidharze weisen im allgemeinen eine Aminzahl von 30 bis 200 (mg KOH pro g Festharz), eine Hydroxylzahl von 50 bis 500 (mg KOH pro g Festharz) und eine zahlenmittlere Molmasse (Mn) von 250 bis 10000, bevorzugt 300 bis 5000 g/mol auf. Die untere Grenze der Aminzahl sollte bevorzugt 45, besonders bevorzugt 70, die obere Grenze dagegen sollte bevorzugt bei 150, besonders bevorzugt bei 100 liegen.

Beispiele für Amino-Epoxidharze sind Umsetzungsprodukte von epoxidgruppenhaltigen Harzen mit vorzugsweise endständigen Epoxidgruppen aus den Gruppen Polyglycidyläther, Polyglycidylester und Polyglycidylamine mit gesättigten und/oder ungesättigten sekundären und/oder primären Aminen bzw. Aminoalkoholen. Diese können durch mindestens eine primäre und/oder sekundäre Hydroxylgruppe, durch die Dialkylaminogruppe und/oder durch eine primäre Aminogruppe, die durch Ketiminbildung vorübergehend geschützt wird, modifiziert sein. Bevorzugt sind Umsetzungsprodukte aus Epoxiden und Aminen, die durch Reaktion von Verbindungen mit mindestens zwei Epoxygruppen mit Verbindungen mit mindestens einer primären und mindestens einer weiteren primären oder sekundären Aminogruppe erhältlich sind.
Hydroxylgruppenhaltige Amino-Epoxidharze werden zweckmäßig aus Polyglycidyläthern mit bevorzugt zwei 1,2-Epoxidgruppen pro Molekül erhalten. Bevorzugt sind Polyglycidyläther von mehrwertigen ein- oder mehrkernigen Phenolen, die auch Substituenten an den Arylgruppen tragen können.
Diese Polyglycidyläther haben eine zahlenmittlere Molmasse (Mn) von etwa 300 bis 5000 g/mol und eine Molmasse dividiert durch die Anzahl der Epoxygruppen ("Epoxid-Äquivalentgewicht") von etwa 170 bis 2500 g/mol. Beispiele hierfür sind Umsetzungsprodukte von Epichlorhydrin oder Methylepichlorhydrin mit Dihydroxydiphenylmethan (Bisphenol F) oder Dihydroxydiphenylpropan (Bisphenol A), sowie mit Dihydroxybenzophenon, Dihydroxynaphthalin und Resorcin. Polyepoxide mit geeigneter Molmasse werden entweder durch Auswahl der Mol-Verhältnisse von Bisphenol und Epichlorhydrin oder durch Reaktion der monomeren Diglycidylverbindungen mit weiterem Bisphenol unter Zusatz von Katalysatoren wie Lewis-Säuren oder Phosphoniumsalzen hergestellt.

Die Epoxidharze können auch vollständig oder teilweise hydriert sein; es können auch Gemische von Epoxidharzen mit unterschiedlicher Struktur und Molmasse eingesetzt werden. Weiterhin kann zum Elastifizieren ein Teil der aromatenhaltigen Polyglycidyläther durch aliphatische Polyglycidyläther ersetzt werden, deren Diolkomponenten sich vorzugsweise von Polyätherglykolen auf Basis von Äthylen- und Propylenoxid sowie deren Mischungen ableiten. Auch verzweigte Polyätherpolyole sind erfindungsgemäß verwendbar, wie sie bei Einsatz von Glycerin, Trimethylolpropan oder Pentaerythrit bei der Polymerisation der Olefinoxide entstehen.

Beispiele von gemischten Epoxiden sind Glycidyläther von Bisphenol A- und Bisphenol F- Polypropylenglykol- und Polyäthylenglykoläthern (mit verschiedener Molmasse). Die modifizierten Epoxidharze können auch durch Reaktion mit langkettigen Polyalkoholen wie Hexandiol-1,6, Neopentylglykol, bisäthoxyliertes Neopentylglykol, Hydroxypivalinsäure-neopentylglykolester und Bis(hydroxymethyl)-cyclohexan, Monoanhydro-pentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen modifiziert werden. Während Polyalkohole mit primären OH-Gruppen sich bei geeigneter Katalyse direkt mit Polyglycidyläthern umsetzen lassen, werden sekundäre OH-Gruppen zunächst mit Diisocyanat umgesetzt. Das erhaltene NCO-terminierte Reaktionsprodukt kann dann ohne Schwierigkeiten als Brücke zwischen 2 Mol Polyglycidyläther unter Vergrößerung der Molmasse eingebaut werden.

Eine ausführliche Aufzählung der geeigneten Epoxidverbindungen findet sich in den Handbüchern "Epoxidverbindungen und Harze" von A.M. Paquin, Springer Verlag Berlin 1958, Kapitel iv und "Handbook of Epoxy Resins" von H.Lee, K. Neville, McGraw-Hill Book Company, New York 1982 Reissue, sowie "Epoxy Resin Chemistry and Technology" von C.A. May, Marcel Dekker Inc., New York and Basel 1988.

Das Epoxidharz kann auch mit gesättigten oder ungesättigten Polycarbonsäuren und/oder Hydroxyalkylcarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure und dimere Fettsäure. Als Hydroxyalkylcarbonsäuren werden Milchsäure, Dimethylolpropionsäure oder auch carboxyl- und hydroxylgruppenhaltige Polyester verstanden. Bei der Umsetzung von überschüssigem Polyglycidyläther mit niedriger Molmasse mit Polycarbonsäuren und/oder Polyalkoholen werden als Zwischenstufe modifizierte Polyglycidyläther erhalten, die dann weiter mit Aminen und/oder Aminoalkoholen reagieren.

Es können auch heterocyclische Polyepoxidverbindungen verwendet werden, wie 1,3-Diglycidyl-5.5-dimethylhydantoin, Triglycidylisocyanurat oder Diepoxide aus Bisimiden. Eine andere geeignete Klasse von Polyepoxiden sind Polyglycidyläther von phenolischen Novolakharzen, wodurch die Funktionalität von 2 bis auf etwa 6 Glycidylgruppen pro Molekül gesteigert werden kann. Durch Defunktionalisieren mit langkettigen Alkylphenolen wie Dodecylphenol können zusätzlich elastifizierende Elemente eingebaut werden. Auch können Polyglycidylester von Polycarbonsäuren wie Hexahydrophthalsäurediglycidylester, Tetrahydrophthalsäurediglycidylester oder Fumarsäurediglycidylester verwendet werden.

Das Einführen der Aminogruppen erfolgt entweder durch Addition von NH-reaktiven Verbindungen an die Epoxidgruppe oder durch Umsetzen der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkanol (vgl. DE-A-27 07 405) entstehen.

Als NH-reaktive Verbindungen werden aliphatische lineare oder verzweigte Amine verwendet. Geeignet sind primäre Amine wie Methylamin, Äthylamin, Propylamin, Butylamin, Octylamin, Monoäthanolamin, 2-Äthylhexylamin, Dimethylaminopropylamin, Diäthylaminoäthylamin, Dimethylaminoneopentylamin oder Methoxypropylamin. Bevorzugt werden sekundäre Amine wie Dialkylamine, Monoalkylhydroxyalkylamine und Dihydroxyalkylamine. Beispiele für solche Verbindungen sind Dimethylamin, Diäthylamin, Dipropylamin, Dibutylamin, Methylbutylamin, Dimethylaminopropylamin, N-Methylaminoäthanol oder Diäthanolamin oder auch cyclische Amine, wie Morpholin oder Oxazolidin. Beim Einsatz der primären Amine reagiert das Amin mit der Epoxidgruppe in Abhängigkeit von den angebotenen stöchiometrischen Verhältnissen mit 1 bis 2 Epoxidgruppen unter Molekülvergrößerung.

Weiterhin können primäre Amine und sekundäre Polyoxyalkylen- Mono- und Di-Amine eingesetzt werden. Als Beispiele für solche Monoamine werden genannt: Äthanolamin, Propanolamin, Butanolamin, Äthylenglykol(2-amino-äthyl)äther (H₂N-CH₂-CH₂-O-CH₂-CH₂-OH) und Diäthylenglykolmono(3-aminopropyl)äther (H₂N-(CH₂)₃-O-CH₂-CH₂-O-CH₂-CH₂-OH). Beim Einsatz der primären Amine reagiert das Amin mit der Epoxidgruppe in Abhängigkeit von den angebotenen stöchiometrischen Verhältnissen unter Molekülvergrößerung. Als Beispiel für solche kommerziell erhältlichen Amine werden genannt: Jeffamine® M-Serie, Jeffamine® D-Serie und Jeffamine® ED-Serie.

Weiterhin kommen Di- oder Triamine mit primären und/oder sekundären Aminogruppen in Frage, wie z.B. Laurylpropylendiamin, Talgfettpropylendiamin.

Mit sekundären Diaminen tritt eine Kettenverlängerung ein. Als sekundäre Diamine, bevorzugt langkettige Diamine, werden N,N'-Dialkyldiaminoalkane wie z.B. N,N'-Bis(isohexyl)-1,6-diaminohexan, N,N'-Bis(isohexyl)isophorondiamin, N,N'-Bis(isohexyl)-dimethylhexamethylendiamin, N,N'-Bis(isohexyl)-2-methylpentamethylendiamin, N,N'-Bis(isohexyl)-äthylendiamin und N,N'-Bis(isohexyl)-di-(4-aminocyclohexyl)methan oder Umsetzungsprodukte von gesättigten Glycidyläthern oder -estern oder Epoxyalkanen mit primären Diaminoalkanen verwendet wie das Additionsprodukt von Hexandiamin-1.6 oder 2-Methylpentamethylendiamin mit 2 Mol Glycidylester der Versaticsäure (in α-Stellung verzweigte Monocarbonsäuren, mit 9 bis 11 C-Atomen).

Als Monoepoxide können für diesen Zweck auch gesättigte oder ungesättigte Glycidyläther oder α-Epoxide verschiedener Kettenlänge wie Dodecan-1,2-oxid oder Butylenoxid eingesetzt werden. Die geeignete Zahl an Hydroxylgruppen entsteht dabei einmal automatisch aus der Epoxidgruppe bei der Addition der sekundären Aminogruppen, zum anderen kann sie durch Einsatz von Hydroxyalkylaminen gesteuert werden. Weiterhin können als sekundäre Diamine das Umsetzungsprodukt von 2 Mol 2-Äthylhexylamin mit 1 Mol Beckopox® EP 075 (Diglycidyläther auf Basis von Propylenoxid) und/oder 1 Mol Beckopox® EP 140 (Diglycidyläther auf Basis von Bisphenol) sowie aliphatische sekundäre Diamine auf Basis von Propylenoxid-Addukten von Diolen oder Triolen, wie z.B. Novamin®-Typen zum Einsatz kommen.

Die Molverhältnisse zwischen Epoxid- und Amino-Gruppenhaltigen Verbindungen sind so zu wählen, daß der vollständige Einbau des Amins gewährleistet ist, weil sonst durchbruchartige Oberflächenstörungen beim elektrophoretischen Beschichten auftreten können, d.h. ein geringfügiger Überschuß an Epoxidgruppen ist vorteilhaft.

Es können alle Amine gleichzeitig mit den Epoxidgruppen umgesetzt oder es kann stufenweise vorgegangen werden. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen.

Bei der Herstellung des Amino-Epoxid-Harzes geht man vorteilhafterweise so vor, daß man zunächst das Epoxid-Harz in einem Lösungsmittel löst und dann mit den Aminen umsetzt.

Bei einer besonders bevorzugten Herstellungsvariante werden die gelösten Epoxidharze zu einer Mischung aus den entsprechenden Aminen, Bisphenol A und Lösungsmittel dosiert.

Bei der Herstellung des Wismut-Katalysators geht man erfindungsgemäß so vor, daß eine oder mehrere basische Wismutverbindungen in einer wäßrigen Säure aufgelöst werden und anschließend ein Umsetzungsprodukt aus mindestens einer Epoxidverbindung und mindestens einem organischen Amin zugegeben wird, wobei die Säure in einer solchen Menge eingesetzt wird, daß pro 1 mol Wismut zwischen 0,1 mol und weniger als 2 mol dissoziierbare Protonen vorhanden sind. Im einzelnen geht man so vor, daß eine Mischung der basischen Wismutverbindung mit der Säurekomponente und Wasser auf eine Temperatur zwischen 60 und 100 °C unter Rühren erwärmt wird. Nachdem die Wismutverbindung vollständig in Lösung gegangen ist, wird ein Epoxid-Amin-Addukt, gegebenenfalls in Lösung, sowie gegebenenfalls eine weitere Menge Wasser zugegeben, um den Feststoffgehalt auf 30 bis 60 % der Gesamtmasse einzustellen. Nach Abkühlen der Mischung wird über ein Tiefenfilter filtriert, um Teilchen über 10 µm Größe zu entfernen. Man erhält eine Lösung, die eine leichten Tyndall-Effekt zeigt. Bei Lagerung bis zu drei Monaten zeigt sich kein Niederschlag.

Weiterer Gegenstand der Erfindung sind kataphoretische Tauchlackzubereitungen enthaltend Wismutkatalysatoren, die nach dem erfindungsgemäßen Verfahren hergestellt wurden.
Die Katalysatorlösung kann zu einer KTL-Badflüssigkeit zugesetzt werden, ohne daß deren pH-Wert wesentlich verändert wird. Die Katalysatorlösung wird in einer solchen Menge zugesetzt, daß der Massengehalt an Wismut im KTL-Bad zwischen 0,2 und 5 % bezogen auf die Gesamtmasse an Feststoff im KTL-Bad liegt.
Die katalytische Aktivität für die Härtung der KTL-Schicht ist gleich wie die der üblicherweise verwendeten Blei- und Zinnverbindungen. Die Korrosionsschutzwirkung entspricht der von bleihaltigen Katalysatorzubereitungen.
Die Wismutkatalysatoren lassen sich auch für andere kationische Beschichtungssysteme verwenden, die durch Umurethanisierung, Umesterung oder Umamidierung härtbar sind.
Die nachfolgenden Beispiele verdeutlichen die Vorteile der Erfindung.

### Beispiele:

### Herstellung des Katalysators

### Beispiel 1:

Eine Mischung aus 93,2 g Diwismuttrioxid (Bi₂O₃), 60 g Dimethylolpropionsäure (DMPS) und 164,2 g entionisiertem Wasser (VEW) wird auf 80 °C erwärmt. Nach 2 Stunden werden 200 g eines Epoxyaminaddukts entsprechend P 44 13 059.7 Beispiel 3, das 55 % in Methoxypropanol gelöst ist, und 120 g entionisiertes Wasser zugegeben. 30 Minuten später wird abgekühlt und über ein 10 µm Tiefenfilter filtriert. Man erhält eine stabile leicht dispersoide Lösung mit folgenden Kennzahlen: Festkörper: 41 %, Säuregehalt: 70 mmol/100 g Lsg. und Wismutmassengehalt 13 %.

### Vergleichsbeispiel 1:

Eine Mischung aus 93,2 g Bi₂O₃, 120 g DMPS und 422,2 g VEW wird auf 80 °C erwärmt und 2 Stunden gehalten. Die klare Lösung wird abgekühlt und über ein 10 µm Tiefenfilter filtriert. Man erhält eine Lösung mit einem Wismutmassengehalt von 13 % und einem Säuregehalt von 140,8 mmol/100 g Lsg. Aus der Lösung fällt über Nacht ein nicht wieder lösbarer, weißer Niederschlag aus.

### Vergleichsbeispiel 2:

Eine Mischung aus 93,2 g Bi₂O₃, 161 g DMPS und 381,2 g VEW wird auf 80 °C erwärmt und 2 Stunden gehalten. Nach Abkühlen und Filtrieren über 10 µm Tiefenfilter der klaren Lösung erhält man einen lagerstabilen Aufschluß des Wismuts mit folgenden Kennzahlen: Wismutmassengehalt: 13 %, Feststoff: 40 % und Säuregehalt: 189 mmol/100 g Lsg.

### Beispiel 2:

### Herstellung einer KTL-Badflüssigkeit und Abscheideergebnis:

Zu einem KTL-Bad, bestehend aus Massenanteilen von 30 % einer Bindemittel-Dispersion, gemäß EP-B 0 000 086, Bsp. 31, und 10 % einer Katalysator-freien Pigmentpaste, gemäß EP-A 0 569 842, Bsp. 2.1, werden 1,2 % des Wismut-Aufschlusses nach Beispiel 1 und Vergleichsbeispiel 2 gegeben, mit 58,8 % entionisiertem Wasser wird anschließend verdünnt. Die Lackzubereitungen werden der kataphoretischen Abscheidung in einem offenen Glasgefäß unterworfen. Als Kathode dienen phosphatierte Stahlbleche und als Anode, im Abstand von 5 bis 10 cm von der Kathode, blankes Stahlblech. Die Badtemperatur beträgt 32 °C, die Abscheidedauer beträgt 2 Minuten. Die Rührung erfolgt über einen PTFE-beschichteten Magnetrührstab.

Die jeweils angelegten Spannungen, die erzielten Filmdicken und die Eigenschaften der abgeschiedenen und anschließend gehärteten Filme (Einbrenndauer 20 min, Ofentemperatur 170 °C) sind in der nachstehenden Tabelle wiedergegeben:

| | Einheiten | Zugabe des Wismut-Aufschlusses nach Beispiel 1 | Zugabe des Wismut-Aufschlusses nach Vergleichsbeispiel 2 |
|---|---|---|---|
| Schichtdicke bei 225 V | µm | 12,5 | 7,5 |
| Schichtdicke bei 250 V | µm | 14,5 | 9 |
| Schichtdicke bei 275 V | µm | 16,5 | 11 |
| Schichtdicke bei 300 V | µm | 19 | 14 |
| Durchbruchspannung | V | 325 | 325 |
| Oberflächenrauhigkeit | µm | 0,28 | 0,55 |
| (Ra-Wert) | | | |
| Aceton-Beständigkeit | s | > 60 | > 60 |
| Texanol-Korrektur zum Errei- | % | 0,2 | 0,7 |
| chen von 20 µm Schichtdicke | | | |
| Umgriff: | | | |
| Schichtdicke außen | µm | 20 | 19 |
| Reichweite innen | cm | 17 | 14 |
| 7 µm-Grenze | cm | 10 | 7,5 |

Die Vorteile des erfindungsgemäßen Wismut-Katalysators gegenüber einem Wismutkatalysator des Standes der Technik ergeben sich aus den verbesserten Werten für
- Schichtdicke: größer bei gleicher Abscheidespannung
- Verlauf, Oberflächenrauhigkeit: halbe Rauhtiefe Ra
- Umgriff: die Beschichtung in Hohlräumen ist deutlich verbessert

## Patentansprüche

1. Wasserlösliche Wismutverbindungen enthaltende Zusammensetzungen, die als Katalysatoren für die Härtung von kataphoretischen Tauchlacken geeignet sind, dadurch gekennzeichnet, daß sie ein Epoxid-Amin-Addukt in einer solchen Menge enthalten, daß das Verhältnis der Anzahl der Wismut-Atome zur Anzahl der β-Hydroxyamin-Gruppen des Epoxid-Amin-Addukts 1:10 bis 10:1 beträgt, und daß zur Herstellung der Wismutverbindung Säure in einer solchen Menge eingesetzt wird, daß auf 1 mol Wismut zwischen 0,1 mol und weniger als 2 mol dissoziierbare Protonen kommen.

2. Eine Zusammensetzung nach Anspruch 1, dadurch gekennzeichnet, daß das Verhältnis der Anzahl der Wismut-Atome zur Anzahl der β-Hydroxyamin-Gruppen des Epoxid-Amin-Addukts 1:5 bis 5:1 beträgt.

3. Wismuthaltige Katalysatoren nach Anspruch 1, dadurch gekennzeichnet, daß zur Herstellung der Wismutverbindung Säure in einer solchen Menge eingesetzt wird, daß auf 1 mol Wismut zwischen 0,2 mol und weniger als 1,5 mol dissoziierbare Protonen kommen.

4. Wismuthaltige Katalysatoren nach Anspruch 1, dadurch gekennzeichnet, daß zur Herstellung der Wismutverbindung Säure in einer solchen Menge eingesetzt wird, daß auf 1 mol Wismut zwischen 0,3 mol und weniger als 1,2 mol dissoziierbare Protonen kommen.

5. Verfahren zur Herstellung von Wismutverbindungen enthaltenden Zusammensetzungen, die als Katalysatoren für die Härtung von kataphoretischen Tauchlacken geeignet sind, durch Auflösen einer oder mehrerer basischer Wismutverbindungen in einer wäßrigen Säure und anschließender Zugabe eines Umsetzungsprodukts aus mindestens einer Epoxidverbindung und mindestens einem organischen Amin, dadurch gekennzeichnet, daß die Säure in einer solchen Menge eingesetzt wird, daß pro 1 mol Wismut 0,1 mol bis zu weniger als 2 mol dissoziierbare Protonen vorhanden sind.

6. Verfahren nach Anspruch 5, dadurch gekennzeichnet, daß die Säure auseiner oder mehreren organischen Säuren besteht, die jeweils mindestens eine alkoholische Hydroxygruppe tragen.

7. Verfahren nach Anspruch 6, dadurch gekennzeichnet, daß organische Hydroxycarbonsäuren einzeln oder in Mischung eingesetzt werden.

8. Verfahren nach Anspruch 5, dadurch gekennzeichnet, daß die Säurekomponente mindestens eine Bishydroxyalkancarbonsäure enthält.

9. Verfahren nach Anspruch 5, dadurch gekennzeichnet, daß als basische Wismutverbindung ein Oxid oder Hydroxid des dreiwertigen Wismut eingesetzt wird.

10. Verfahren nach Anspruch 5, dadurch gekennzeichnet, daß das Umsetzungsprodukt aus Epoxiden und Aminen durch Reaktion von Verbindungen mit mindestens zwei Epoxygruppen mit Verbindungen mit mindestens einer primären und mindestens einer weiteren primären oder sekundären Aminogruppe erhältlich ist.

11. Wismut enthaltende Katalysatoren zur Härtung von Kataphoreselacken, erhalten nach dem Verfahren von Anspruch 5.

12. Kataphoretische Tauchlackzubereitungen enthaltend Wismutkatalysatoren, die gemäß Anspruch 5 hergestellt wurden.

## Claims

1. A composition comprising water-soluble bismuth compounds which is suitable as catalyst for the curing of cataphoretic deposition coating materials, which comprises an epoxy-amine adduct in a quantity such that the ratio of the number of bismuth atoms to the number of β-hydroxyamine groups in the epoxy-amine adduct is 1:10 to 10:1 and wherein, for the preparation of the bismuth compound, acid is employed in a quantity such that there are between 0.1 mol and less than 2 mol of dissociable protons per mole of bismuth.

2. A composition as claimed in claim 1, wherein the ratio of the number of bismuth atoms to the number of β-hydroxyamine groups in the epoxy-amine adduct is 1:5 to 5:1.

3. A bismuth-containing catalyst as claimed in claim 1, wherein, to prepare the bismuth compound, acid is employed in a quantity such that there are between 0.2 mol and less than 1.5 mol of dissociable protons per mole of bismuth.

4. A bismuth-containing catalyst as claimed in claim 1, wherein, to prepare the bismuth compound, acid is employed in a quantity such that there are between 0.3 mol and less than 1.2 mol of dissociable protons per mole of bismuth.

5. A process for the preparation of a composition comprising bismuth compounds which is suitable as catalyst for the curing of cataphoretic deposition coating materials, by dissolving one or more basic bismuth compounds in an aqueous acid and then adding a reaction product of at least one epoxide compound and at least one organic amine, wherein the acid is employed in a quantity such that 0.1 mol up to less than 2 mol of dissociable protons are present per mole of bismuth.

6. The process as claimed in claim 5, wherein the acid comprises one or more organic acids each of which carries at least one alcoholic hydroxyl group.

7. The process as claimed in claim 6, wherein organic hydroxycarboxylic acids are employed individually or in a mixture.

8. The process as claimed in claim 5, wherein the acid component comprises at least one bishydroxyalkane-carboxylic acid.

9. The process as claimed in claim 5, wherein an oxide or hydroxide of trivalent bismuth is employed as basic bismuth compound.

10. The process as claimed in claim 5, wherein the reaction product of epoxides and amines is obtainable by reacting compounds having at least two epoxide groups with compounds having at least one primary and at least one further primary or secondary amino group.

11. A bismuth-containing catalyst for the curing of cataphoretic coating materials which is obtained by the process of claim 5.

12. A cataphoretic deposition coating formulation comprising bismuth catalysts prepared as claimed in claim 5.

## Revendications

1. Compositions contenant des composés hydrosolubles du bismuth, qui conviennent en tant que catalyseurs pour le durcissement de peintures ou vernis à immersion cataphorétiques, caractérisées en ce qu'elles contiennent un produit d'addition époxyde-amine en une quantité telle que le rapport du nombre d'atomes de bismuth au nombre de groupes β-hydroxyamine du produit d'addition époxyde-amine soit de 1:10 à 10:1, et en ce que, pour la préparation du composé du bismuth, de l'acide est utilisé en une quantité telle que pour 1 mol de bismuth il y ait entre 0,1 mol et moins de 2 mol de protons dissociables.

2. Une composition selon la revendication 1, caractérisée en ce que le rapport du nombre d'atomes de bismuth au nombre de groupes β-hydroxyamine du produit d'addition époxyde-amine est de 1:5 à 5:1.

3. Catalyseurs contenant du bismuth selon la revendication 1, caractérisés en ce que, pour la préparation du composé du bismuth, de l'acide est utilisé en une quantité telle que pour 1 mol de bismuth il y ait entre 0,2 mol et moins de 1,5 mol de protons dissociables.

4. Catalyseurs contenant du bismuth selon la revendication 1, caractérisés en ce que, pour la préparation du composé du bismuth, de l'acide est utilisé en une quantité telle que pour 1 mol de bismuth il y ait entre 0,3 mol et moins de 1,2 mol de protons dissociables.

5. Procédé pour la préparation de compositions contenant des composés du bismuth, qui conviennent comme catalyseurs pour le durcissement de peintures ou vernis cataphorétiques à immersion, par dissolution d'un ou de plusieurs composés basiques du bismuth dans un acide aqueux et addition subséquente d'un produit de réaction d'au moins un composé époxyde et au moins une amine organique, caractérisé en ce que l'acide est utilisé en une quantité telle que pour 1 mol de bismuth il y ait 0,1 mol à moins de 2 mol de protons dissociables.

6. Procédé selon la revendication 5, caractérisé en ce que l'acide est constitué d'un ou de plusieurs acides organiques qui chacun portent au moins un groupe hydroxy alcoolique.

7. Procédé selon la revendication 6, caractérisé en ce que des acides hydroxycarboxyliques organiques seuls ou en mélange sont utilisés.

8. Procédé selon la revendication 5, caractérisé en ce que le composant acide contient au moins un acide bishydroxyalcanecarboxylique.

9. Procédé selon la revendication 5, caractérisé en ce qu'un oxyde ou un hydroxyde du bismuth trivalent est utilisé comme composé basique du bismuth.

10. Procédé selon la revendication 5, caractérisé en ce que le produit de réaction d'époxydes et d'amines peut être obtenu par réaction de composés présentant au moins deux groupes époxy avec des composés présentant au moins un groupe amino primaire et au moins un autre groupe amino, primaire ou secondaire.

11. Catalyseurs contenant du bismuth pour le durcissement de peintures ou vernis cataphorétiques, obtenus selon le procédé de la revendication 5.

12. Préparations de peintures ou vernis cataphorétiques à immersion contenant des catalyseurs au bismuth qui ont été préparés selon la revendication 5.
